Europäisches Patentamt

European Patent Office

Office européen des brevets

(11) Veröffentlichungsnummer: **0 384 164**

**A2**

# EUROPÄISCHE PATENTANMELDUNG

(21) Anmeldenummer: 90101746.7

(22) Anmeldetag: 29.01.90

(51) Int. Cl.⁵: **G11B 23/28, G11B 23/00, G11B 23/03**

(30) Priorität: 24.02.89 DE 3905647

(43) Veröffentlichungstag der Anmeldung:
29.08.90 Patentblatt 90/35

(84) Benannte Vertragsstaaten:
AT BE CH DE DK ES FR GB IT LI LU NL

(71) Anmelder: **DATEV DATENVERARBEITUNGSORGANISATION DES STEUERBERATENDEN BERUFES IN DER BUNDESREPUBLIK DEUTSCHLAND EG**
**Paumgartner Strasse 6-14**
**D-8500 Nürnberg 80(DE)**

(72) Erfinder: **Hofmann, Norbert**
**Fürther Strasse 83**
**D-8500 Nürnberg 80(DE)**

(74) Vertreter: **Patentanwälte Czowalla . Matschkur + Partner**
**Dr.-Kurt-Schumacher-Strasse 23 Postfach 9109**
**D-8500 Nürnberg 11(DE)**

(54) **Sperrvorrichtung für Diskettenlaufwerk-Schächte.**

(57) Vorrichtung zum Sperren eines Diskettenschachtes, in den Speicherdisketten einführbar und dabei mit dem Diskettenlaufwerk beispielsweise eines Personalcomputers koppelbar sind, mit einem in der Außenform der einführbaren Diskette weitgehend entsprechenden Grundkörper mit ein oder mehreren daran befestigten Sperrelementen, welche gegenüber dem Diskettenschacht ein- und ausrastbar oder in Eingriff bringbar durch ein Betätigungsorgan ausgebildet sind.

FIG. 9

## Sperrvorrichtung für Diskettenlaufwerk-Schächte

Die Erfindung betrifft eine Vorrichtung zum Sperren eines Diskettenschachtes, in den Speicherdisketten einführbar und dabei mit dem Diskettenlaufwerk eines Personalcomputers oder dergleichen verbunden werden.

Oft ist es erwünscht, Personalcomputer oder andere rechnergesteuerte Geräte mit Disketten (auch floppy disks genannt) als externe Datenspeicher vor unbefugtem Gebrauch zu schützen, indem deren Diskettenlaufwerke verriegelt werden. Bei auf diese Weise blockierten Diskettenlaufwerken ist es dann nicht möglich, z.B. durch das Laden des Betriebssystems von einer Diskette im Computersystem, implementierte Schutzmechanismen außer Kraft zu setzen. Des weiteren ist bei in einem Netzwerk eingebundenen PCs das unkontrollierte Einspielen von Lizenz-Software, von die lokale Netzwerkumgebung schädigender oder damit unverträglicher Software und/oder das unbefugte Kopieren von Daten vom Arbeitsspeicher, von der Festplatte oder dergleichen auf eine Diskette verhindert.

Zum Zwecke der Verriegelung von Diskettenlaufwerken ist esß bekannt, Schlüsselschalter zu installieren. Dies macht allerdings nachträglich relativ aufwendige und zudem feh-lerträchtige Lötarbeiten am dazugehörigen Computergerät erforderlich.

Hieraus folgt die der Erfindung zugrunde liegende Aufgabe, eine Vorrichtung zum sicheren Blockieren bzw. Verriegeln eines Diskettenschachtes zu schaffen, welche am zugehörigen Computergerät, Schacht und/oder Laufwerk keine nachträglichen Änderungsarbeiten erforderlich macht, mit den Diskettenlaufwerken bzw. deren Einsteckschlitzen kompatibel und zudem einfach konstruiert, stabil, fest sowie kostengünstig herstellbar ist. Zur Lösung wird erfindungsgemäß vorgeschlagen, einen in der Außenform der einführbaren Diskette weitgehend entsprechenden Grundkörper vorzusehen, der ein oder mehrere daran befestigte Sperrelemente aufweist, welche gegenüber dem Diskettenschacht ein- und ausrastbar oder in Eingriff bringbar durch ein zugehöriges Betätigungsorgan ausgebildet sind.

Die Erfindung macht sich die Tatsache zunutze, daß die Schächte von Diskettenlaufwerken mechanisch aufwendig konstruierte Gebilde sind, deren Wände, Führungsschienen oder dergleichen zahlreiche Vorsprünge, Aussparungen, Durchbrüche usw. aufweisen, welche als Einraststellen, Anschlagschultern, Widerhalt oder dergleichen dienen können, mit welchen die Sperrelemente des Vorrichtungsgrundkörpers ineinander greifend, hineingleitend, festhakend, einschnappend oder dergleichen in Eingriff kommen können. Die Außenkontur des Grundkörpers ist vollständig an die marktüblicher Disketten (Standarddisketten-8-Zoll, Minidisketten-5 1/4-Zoll oder Mikrodisketten-3 1/2-Zoll) angepaßt. Der Diskettenschacht ist dabei nahezu vollständig ausgefüllt, so daß auch mit flachem Werkzeug die Sperrelemente mit dem Diskettenschacht, dessen Führungsschienen oder dergleichen nicht außer Eingriff zu bringen sind, was die Betriebs-sicherheit der Computeranlage insgesamt erhöht. Beispielsweise bei der IBM-Modellreihe PS/2-60 und 80 bringen daran angepaßte, erfindungsgemäße "Sperrdisketten" den Vorteil mit sich, daß weder das Gehäuse eines Personalcomputers beschädigt wird, noch - wie im Fall der Installation von elektrischen Schlüsselschaltern - nachträgliche Lötarbeiten notwendig sind, was den Wegfall von Gewährleistungsan-sprüchen innerhalb der Garantiezeit zur Folge haben kann. Zur erfindungsgemäßen Sperrdiskette gehört schließlich noch ein Betätigungsorgan, welches mit den Sperrorganen zusam-menwirkend ausgebildet und angeordnet ist und deren Bedie-nung ermöglicht. Damit ist auch für eine gute Handhabbar-keit der Sperrdiskette Sorge getragen.

In Weiterbildung der Erfindung ist das Betätigungsorgan in den Grundkörper baulich integriert und dort an der aus dem Schachtausgang herausstehenden Stirnseite des Grundkörpers angeordnet. Hierdurch wird die erfindungsgemäße Sperrdiskette zu einem baulich kompakten Gerät geformt, welches alle für die Zweckbestimmung notwendigen Bedienungs- und Funktionselemente aufweist. Dieser Weiterbildungsgedanke läßt sich noch zweckmäßig dadurch ausführen, daß das Betätigungsorgan im Grundkörper verschiebbar zum Einrasten bzw. Lösen der Sperrorgane gelagert ist und einen aus dem Grundkörper herausstehenden Bediengriff aufweist. Mit der Schiebetätigung ist ein besonders einfacher Mechanismus geschaffen, das Einrasten der Sperrorgane auszulösen sowie deren Ausrasten zu bewirken. Durch den herausstehenden Bediengriff ist die erfindungsgemäße Sperrdiskette bereits einfach handhabbar. Eine besonders vorteilhafte Ausführung für den Bediengriff besteht darin, daß er an der Stirnseite des Grundkörpers als vorstehende Lasche mit Bohrung oder als beabstandet verlaufender Steg angeordnet ist, die in Einraststellung der Sperrelemente mit den Konturen einer ent sprechenden Lasche mit Bohrung oder einem entsprechendem Steg kongruent sind, welche sich jeweils an der Ober- oder Unterseite des Grundkörpers befinden. Durch die miteinander fluchtenden Bohrungen der beiden Laschen oder die sich deckenden Zwischenräume zwischen den beiden bündig liegenden Stegen und der gegenüberliegenden Seitenwand der Sperrdiskette läßt sich der Verschlußbügel eines handelsüblichen Vorhängeschlosses leicht einführen.

Zur herstellungstechnisch einfachen Realisierung, und um insbesondere die Sperrelemente und deren Verbindungen zum Betätigungsorgan gegenüber der Umgebung zu schützen, besteht eine andere Ausbildung der Erfindung darin, daß der Grundkörper einen Unterteil und einen darauf aufgesetzten Oberteil aufweist, zwischen denen die Sperrelemente gehaltert und deren Betätigungsmechanismus untergebracht sind. Mit den vor allem an deren Außenrändern aneinander liegenden Ober- und Unterteilen wird gleichsam eine schützende Hülle geschaffen, in deren Innerem die Sperrorgane teilweise sowie der gesamte Betätigungsmechanismus sicher angeordnet ist.

Eine zweckmäßige Realisierung der Sperrelemente besteht in ihrer Ausbildung als Blattfedern, deren biegbare Zungen relativ zur Ober- und/oder Unterseite des Grundkörpers vorgespannt und zum Ein-/Ausrasten verstellbar mittels des Betätigungsorgans ausgebildet sind. Aus der Vorspannung der Blattfedern resultiert, daß deren Zungen in Ruhestellung gegenüber der Ober- oder Unterseite des Grundkörpers versetzt liegen, mit anderen Worten, zum Diskettenschacht oder dessen Führungsschiene ragen, um sich gegen diese zu ver stemmen. Zur Erleichterung des Verstemmens bzw. Einrastens gegenüber dem Diskettenschacht ist es vorteilhaft, das Zungenende ein- oder mehrmals zur Bildung eines Winkel-, insbesondere V-Profils, umzubiegen, also das Zungenende gleichsam als Widerhaken wirken zu lassen oder mit einer wirkungsgleichen Form zu versehen. Eine andere, einen ähnlichen Effekt erzielende Ausbildung der Blattfederzunge besteht darin, auf deren Ober- bzw. Unterfläche einen zur Innenseite des Diskettenschachtes, insbesondere zu dessen Führungsschiene, vorspringenden Zapfen anzubringen. Neben metallischen Werkstoffen eignet sich Kunststoff als Herstellungsmaterial für die Blattfedern.

Eine gleichfalls zweckmäßige Alternativrealisierung für ein Sperrelement besteht darin, es als Federbügel vorzugsweise aus Stahlrundmaterial auszubilden, dessen Biegungsabschnitt in Ruhestellung des Federbügels vom Grundkörper wegragt und zum Ein-/Ausrasten verstellbar mittels des Betätigungsorgans ausgebildet ist. Der Federbügel läßt sich hierbei in einfacher Weise z.B. durch ein Drahtgestell verwirklichen, welches durch geeignete Biegungen gegenüber dem Grundkörper, vor allem dessen Ober- und/oder Unterseite, vorgespannt ist. Vorzugsweise ist der Biegungsabschnitt im Federbügel mittig angeordnet, während dessen Enden der Befestigung und Halterung im Grundkörper dienen. Im Grundkörper können Ausnehmungen wie z.B. Nuten vorgesehen sein, in welche der Biegungsabschnitt bei Auslenkung des Federbügels einrücken kann. Im Rahmen erfindungsgemäßer Weiterbildungen liegt es, wenn der Biegungsabschnitt durch einen im Grundkörper ausgebildeten Durchbruch austritt sowie entsprechend dem Querschnittsprofil dieses Durchbruchs gekrümmt ist und verläuft. Als derartiger Durchbruch kann beispielsweise eine zentral im Grundkörper angeordnete Bohrung dienen, durch welche bei Kupplung mit dem Diskettenlaufwerk seine Diskettenantriebsspindel durchragt. Bei der genannten Ausbildung entspricht dann die Krimmung des Biegungsabschnitts etwa der Krümmung der Diskettenantriebsspindel, und der Federbügel kann sich zur Herbeiführung der Verriegelung an der Spindel festhängen.

Mit Vorteil läßt sich die o.g. Ausbildung des Grundkörpers als aus Ober- und Unterteil zusammengesetzte Hülle speziell so ausführen, daß das Betätigungsorgan als zwischen Unter-und Oberteil beweglich gelagertes, flächiges Schiebeelement ausgebildet ist, welches zu seiner Verstellung mit dem Bediengriff gekoppelt ist. Damit ist das Betätigungsorgan mit dem Grundkörper baulich vereint, wobei die notwendigerweise flache Gesamtgrundform beibehalten wird. In spezieller Weiterführung dieses Gedankens und im Hinblick auf die Ausbildung des Sperrelements als Federbügel und/oder Blattfeder ist das Schiebelement derart gebaut, daß es mit seiner Unter- und/oder Oberseite an dem Federbügel und/oder wenigstens einer Blattfeder anliegt und auf diesen zu ihrer Auslenkung mittels des Bediengriffs verschiebbar angeordnet ist. Die aufliegende Fläche des Schiebeelements kann also mittels des Bediengriffs beispielsweise auf der Blattfederzunge oder dem Biegungsabschnitt des Federbügels gegen ihren Federdruck, d. h. diese aus deren Ausgangs- bzw. Ruhestellung auslenkend, verstellt werden. M.a.W., das flächige Schiebeelement ist zwischen Unter- und Oberteil parallel zu deren Innenseite hin- und herbewegbar geführt und liegt dabei auf der Blattfeder oder dem Federbügel so auf, daß eine Bewegung zu deren Zungenende bzw. wegragenden Biegungsabschnitt hin diese aus der Ruhelage weg vom Diskettenschacht zum Grundkörper hin verstellt. Wird das Schiebeelement bei der Rückbewegung vom Zungenende bzw. Biegungsabschnitt wieder entfernt, bewegen sich die Zunge und/oder die Biegung elastisch federnd wieder zum Diskettenschacht, dessen Führungsschiene od. dgl. hin bzw. von diesem weg, bis mit erreichen der Entriegelungsstellung durch das Schiebeelement die Zunge bzw. der Biegungsabschnitt ihre Ruhestellungen erreicht haben. Diese Ruhestellungen entsprechen der Einraststellung, wobei sich das Zungenende bzw. der Biegungsabschnitt gegen den Diskettenschacht verstemmen.

Um eine feste und sichere Halterung der Blattfedern als Sperrelemente zu erzielen, ist eine erfindungsgemäße Weiterbildung dahingehend vorgesehen, daß der Ober- und/oder Unterteil an seiner Innenseite einen sich zur gegenüberliegenden Innenseite erstreckenden Dom aufweist, dem eine Bohrung im nicht zur Zunge gehörigen Teil der Blattfeder entspricht. Der Dom läßt sich durch die Bohrung in der Blattfeder führen, so daß diese von Ober- und Unterteil umgeben mechanisch fest und vor allem unverrückbar aufgehängt ist, was der sicheren Verriegelung des Diskettenschachtes dient. Durch die oben genannte Unterbringung des flächigen Schiebeelements in der aus Unter- und Oberteil bestehenden Hülle wird vorteilhaft eine besonders flache Ausbildung des Betätigungsmechanismus erreicht, was im Hinblick auf die für die erfindungsgemäße Sperrdiskette notwendige, besonders flache Bauform anzustreben ist.

Eine andere Weiterbildung der Erfindung bezüglich der Realisierung der Sperrelemente besteht darin, sie als vom Grundkörper mittels des Betätigungsorgans seitlich ausrückbare Greifbacken zum Verstemmen gegenüber dem Diskettenschacht, insbesondere seiner Wand, auszubilden. Mit Vorteil ist dabei das Betätigungsorgan als zwischen Unter- und Oberteil sowie zwischen den Greifbacken an deren gegenüberliegende Seiten seitlich anliegend geführter Schieber mit in Schieberichtung zu- bzw. abnehmender Breite realisiert, und die Greifbacken sind so geformt, daß sie mittels quer zur Schieberichtung gerichteter Federelemente in Anlage an den Schieber gedrückt werden. Die zu- bzw. abnehmende Breite bedingt, daß die Seiten bezüglich der Mittelachse des Grundkörpers nach außen bzw. nach innen schräg und die Innenseiten der Greifbacken entsprechend verlaufen, damit sie an den schrägen Außenseiten des Schiebers anliegen.

Schließlich liegt es im Rahmen der Erfindung, eine Folie zwischen Oberteil und Unterteil des Grundkörpers so anzuordnen, daß ein Durchbruch des Grundkörpers abgedeckt wird, wobei die Folie aus elektrisch und/oder magnetisch isolierendem Material, z.B. aus Kunststoff, besteht. Der damit erzielte Vorteil besteht darin, daß Schreib-Leseköpfe in den Diskettenlaufwerken vor Beschädigung, Verschleiß u. dgl. geschützt sind.

Weitere Merkmale, Einzelheiten und Vorteile ergeben sich aus der nachfolgenden Beschreibung einiger bevorzugter Ausführungsbeispiele der Erfindung sowie anhand der Zeichnung.

Diese zeigt beispielhafte Sperrdisketten mit zusammenwirkenden Diskettenführungen in perspektivischen, auseinandergezogenen und geschnittenen Darstellungen, wobei in

Figur 1 der Oberteil,

Figur 2 die Sperrelemente und das Schiebeelement,

Figur 3 der Unterteil,

Figur 4 eine Ansicht von verriegelter Sperrdiskette in der Diskettenführung im Schnitt etwa nach der Linie IV - IV in Fig. 3 und

Figur 5 eine der Fig. 4 entsprechende Schnittansicht von entriegelter Sperrdiskette in der Diskettenführung
eines ersten Ausführungsbeispiels, in

Fig. 6 der Oberteil,

Fig. 7 das Sperrelement und das Schiebeelement,

Fig. 8 der Unterteil,

Fig. 9 eine Ansicht von verriegelter Sperrdiskette und Diskettenschacht im Schnitt etwa nach der Linie IX - IX in Fig. 8, und

Fig. 10 eine der Fig. 9 entsprechende Schnittansicht von entriegelter Sperrdiskette im Diskettenschacht
eines zweiten Ausführungsbeispiels, und in

Fig. 11 in Draufsicht eine Abwandlung der erfindungsgemäßen Sperrdiskette
gemäß einem dritten Ausführungsbeispiels dargestellt sind.

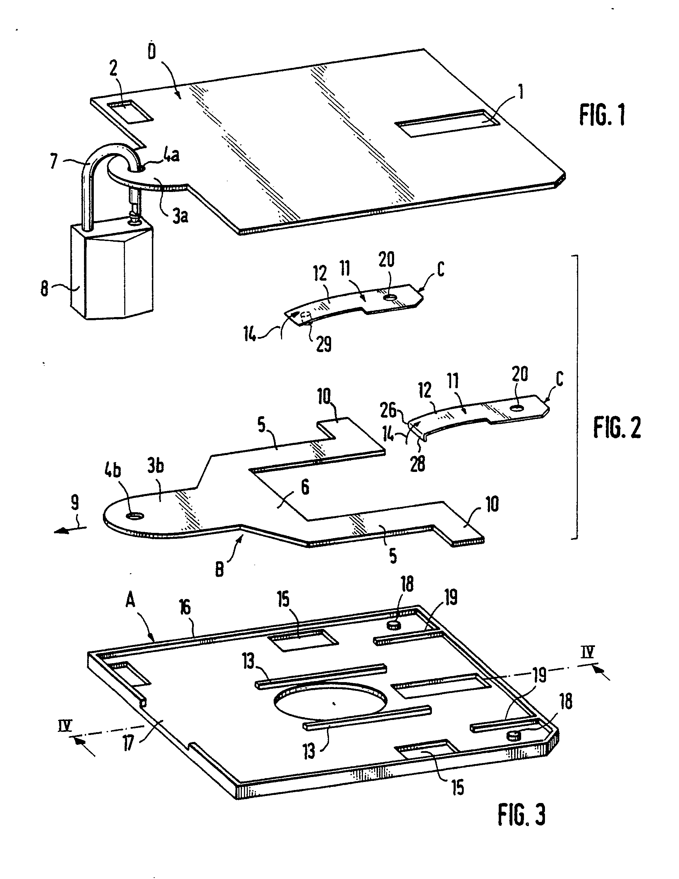

Die in Fig. 1 bis 5 dargestellte Sperrdiskette weist einen Unterteil A (Figur 3) und einen Oberteil D (Figur 1) auf, welcher auf erhöhte Ränder und/oder Vorsprünge auf der Innenseite des Unterteils A aufgesetzt ist. Ferner besitzt die Sperrdiskette ein flaches Schiebeelement B sowie flache Blattfedern C (Figur 2), welche im vom Unterteil A und darauf aufgesetzten Oberteil D begrenzten Innenraum (nicht dargestellt) untergebracht sind.

Gemäß Figur 1 ist der Diskettenoberteil D als flache Platte mit etwa rechteckiger Grundform ausgeführt und mit einem ersten Durchbruch 1 für die beim Diskettenlaufwerk vorgesehenen Schreib-/Leseköpfe und einem zweiten, im Eckbereich angeordneten Durchbruch 2 versehen, der zum Abtasten eines etwaigen Disketten-Schreibschutzes dient. Die nach dem Einschieben der Sperrdiskette noch außerhalb des Diskettenschachtes in manueller Reichweite verbleibende Seite des Oberteils D ist um einen Ansatz bzw. einen flächige Lasche 3a erweitert, welche zum Benutzer hin vorsteht. Sie ist von einer Bohrung 4a durchsetzt. Zweckmäßig ist es auch, die Lasche 3a am Unterteil A anstelle des Oberteils D entsprechend anzubringen.

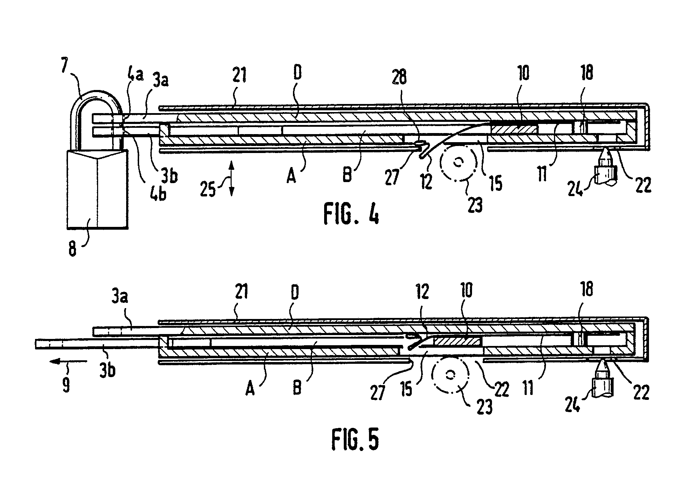

Gemäß Figur 2 ist das Schiebeelement flach ausgebildet und mit zwei Schenkeln 5 versehen, die an einer Gabelung 6 zusammenlaufen. Die Gabelung 6 wird durch einen weiteren Ansatz bzw. eine weitere Lasche 3b fortgesetzt, welche ebenfalls von einer Bohrung 4b durchsetzt ist. Die Ausbildungen der Lasche 3a des Oberteils D und der Lasche 3b des Schiebeelements B entsprechen einander derart, daß deren jeweilige Bohrungen 4a bzw. 4b zueinander deckungsgleich bzw. bündig liegen, wenn sich die Sperrelemente C im Veriegelungs- bzw. Einrastzustand befinden. Dann ist es möglich, den Bügel 7 eines Vorhängeschlosses 8 durch beide Löcher 4a, 4b zu führen und das Schloß zu verschließen (vgl. Fig. 4). Damit ist das Schiebeelement B gegenüber dem Oberteil D und dem damit fest verbundenen Unterteil A weitgehend unverrückbar gehalten, so daß eine Entriegelung der Sperrelemente C durch Bewegen des Schiebeelements B gemäß Schieberichtung 9 relativ zum Oberteil D nicht möglich ist. Die auseinander gegabelten Schenkel 5 des Schiebeelements B laufen an ihren Enden rechtwinklig und eben in Stellbacken 10 aus. Im zusammengebauten Zustand der Sperrdiskette wirken diese Stellbacken 10 mit den Sperrelementen C zu deren Ein- und Ausrastung zusammen; diese sind im Beispiel als Blattfedern 11 realisiert, und bei zusammengebauter Sperrdiskette liegen an deren Unterseiten die Oberseiten der Stellbacken 10 an, wie in Figur 4 und 5 dargestellt. Wird das Schiebeelement B gemäß Schieberichtung 9 bewegt, gleiten die Stellbacken 10 auf den Unterseiten der Blattfedern 11 und geraten dabei in den Bereich von deren biegbaren Zungen 12. Da die Schenkel 5 mit deren Stellbackenenden 10 zwischen dem Oberteil D und auf der Innenseite des Unterteils A aufgesetzte Führungsstege 13 (vergleiche Figur 3) in der Verschiebungsebene längs Schieberichtung 9 starr geführt sind, werden die Zungen 12 aus ihrer Ruhestellung gemäß Schwenkrichtung 14 zum Oberteil D bewegt. Bei Umkehr der Schiebebewegung für das Schiebeelement B entgegen der Schieberichtung 9 geraten die Zungen 12 entgegengesetzt zur Schwenkrichtung 14 wieder in ihre Ruhe- bzw. Ausgangsstellung zurück.

In deren Ausgangsstellung ragen die Enden der Zungen 12 durch dritte Durchbrüche 15, die von der Platte des Unterteils A an entsprechender Stelle ausgenommen sind, wie in Figur 3 dargestellt. Der Unterteil A besitzt einen zum Oberteil D hochgezogenen Rand 16, der von einer Aussparung 17 unterbrochen ist. Diese ist an der der Lasche 3b benachbarten Seite des Unterteils A angeordnet. Durch diese Aussparung 17 kann im zusammengebauten Zustand der Sperrdiskette die Lasche 3b des Schiebeelements B hindurchragen und als Griffteil zum Bewegen des Schiebeelements B in oder entgegengesetzt der Schieberichtung 9 dienen. Zur ortsfesten Halterung der Blattfedern 11 ist der Unterteil A auf seiner Innenseite mit je einem Dom 18 und einem benachbart angeordneten Begrenzungssteg 19 versehen, welche jeweils in Richtung zum Diskettenoberteil D ragen. Die Blattfedern weisen in ihrem nicht zur biegbaren Zunge 12 gehörigen Bereich entsprechende Bohrungen 20 auf, durch welche im zusammengebauten Zustand der Sperrdiskette jeder Dom 18 führt. Die Begrenzungsstege 19 verhindern eine etwaige Schwenkbewegung der je an einem Dom 18 aufgehängten Blattfedern 11 um die Dom-Längsachsen.

In der Schnittdarstellung der Figuren 4 und 5 ist schematisch die Disketten-Führungsschiene 21 eines (nicht gezeichneten) Diskettenschachtes dargestellt. Die Führungsschiene 21 ist gemäß gezeichnetem Beispiel mit ein oder mehreren Aussparungen/Unterbrechungen 22 versehen, durch welche zum Diskettenschacht gehörige (gestrichelt gezeichnete) Führungsrollen 23, Fixierungsstifte 24 oder dergleichen hindurchtreten, insbesondere wenn zur Kopplung mit dem Diskettenlaufwerk (nicht gezeichnet) die Führungsschiene 21 in Vertikalrichtung 25 nach unten bewegt wird. In Figuren 4 und 5 ist die Führungsschiene 21 in der Stellung gezeigt, in welcher eine etwaig eingeführte Diskette vom Diskettenlaufwerk entkoppelt wäre.

In der nicht ausgelenkten Stellung der Zungen 12 der Blattfedern 11 sind deren Enden in die Aussparungen 22 der Führungsschiene 21 eingerückt und verstemmen sich gegen die anliegenden Aussparungs-/Unterbrechungskanten 27. Diese Stellung entspricht dem Verriegelungszustand des Diskettenschachtes, wie in Figur 4 gezeigt. Zur Verstärkung der einem Festhaken vergleichbaren Wirkung kann das Zungenende ein- oder mehrfach mit Biegungen 28 versehen sein. Ferner ist es möglich, in die Zunge 12 einen Zapfen 29 einzunieten (vgl. Figur 2), welcher mit einer Aussparung/Unterbrechung der Diskettenführung 21 oder mit einer sonstigen Vertiefung, Bohrung oder dergleichen des Diskettenschachtes in Eingriff kommen kann.

Gemäß Figur 5 wird der Diskettenschacht bzw. die zugehörige Führungsschiene 21 wie folgt entriegelt: Das Schiebeelement B wird anhand von dessen vorstehender Lasche 3b in die Schieberichtung 9 bewegt, so daß der Stellbacken 10 des Schiebeelements B unter den Zungenteil 12 der Blattfeder 11 geschoben wird, wobei das Biegungsende 28 der Zunge 12 von der Aussparungskante 27 ausrastet, wegbewegt und in den Innenraum zwischen Unterteil A und Oberteil D der Sperrdiskette verstellt wird. Nun kann die gesamte Sperrdiskette/Sperrvorrichtung A, B, C, D gleitend von der Führungsschiene 21 herausgezogen werden.

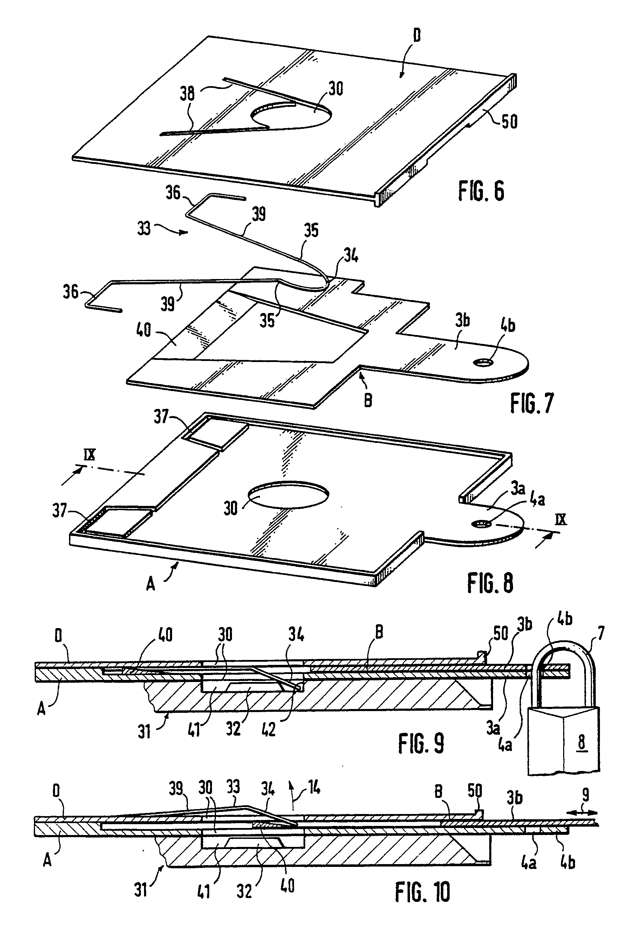

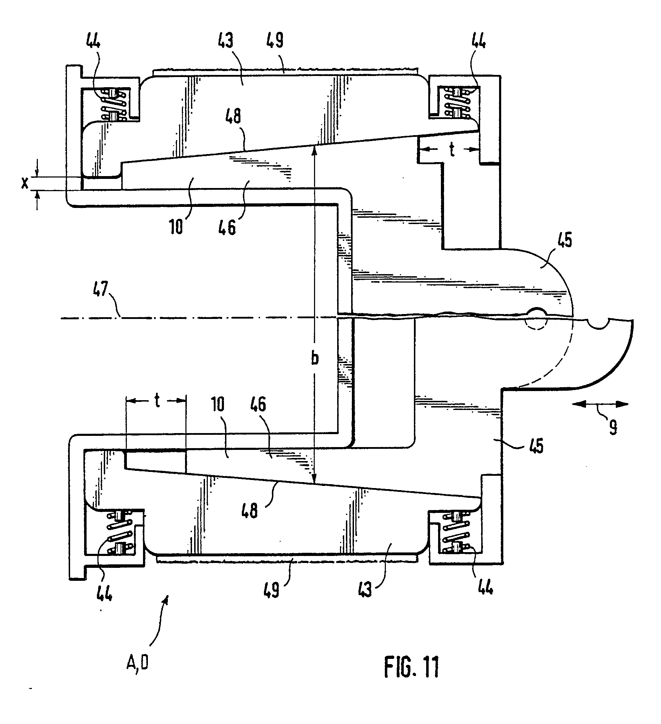

Das in Fig. 6 bis 10 dargestellte Ausführungsbeispiel ist speziell auf 5 1/4"-Disketten ausgelegt. Hier weisen sowohl der Unterteil A (Fig. 8) als auch der Oberteil D (Fig. 6) jeweils einen Zentraldurchbruch 30 auf, welche bei aufeinandergelegtem Unter- und Oberteil gemäß Fig. 9 u. 10 deckungsgleich sind. Bei in den Diskettenschacht 31 (schematisch und abgebrochen dargestellt) eingeschobenem Grundkörper A, D liegen die Zentralbohrungen 30 etwa über der kegelig hochragenden Antriebsspindel 32. Als Sperrelement dient bei dieser Ausführung ein symmetrisch geformter Federbügel 33 mit einem mittleren Biegungsabschnitt 34,
der über Kanten 35 gegenüber der übrigen Ebene
des Federbügels 33 abgeschrägt ist. Hierdurch
wird erreicht, daß im eingebauten Zustand der Biegungsabschnitt 34 vom Grundkörper A, D durch
den Zentraldurchbruch 30 vorsteht (vgl. Fig. 9). Der
Federbügel 33 ist an seinen Enden. 36 in entsprechende Nuten 37 gehalten, die im Unterteil A ausgebildet sind. An den Zentraldurchbruch 30 des
Oberteils D schließen sich längliche Aussparungen
38 an, die mit zunehmendem Abstand voneinander
auslaufen. Sie dienen dazu, den sich an dem Biegungsabschnitt 34 des Federbügels 33 anschließenden Schenkeln 39 und mithin dem Biegungsabschnitt 34 selbst einen Austritt aus dem Grundkörper A, D zu ermöglichen (vgl. Fig. 10). Der Durchtritt wird einerseits beim Einführen des Grundkörpers A, D in den Diskettenschacht. 31, wenn der
Biegungsabschnitt 34 die Antriebsspindel 32 streift,
und andererseits durch Verstellung des Schiebeelements B in Schieberichtung 9 zum Ausgang des
Diskettenschachtes 31 herbeigeführt. Zu diesem
Zweck ist das Schiebeelement B an seinem von
seiner Lasche 3b abgewandten Ende mit einem
Quersteg 40 versehen, der gegenüber der Mittelebene des Grundkörpers A, D zur Mitte hin abgeschrägt ist. An der Stirnseite des Oberteils D ist
eine abstehende Blende 50 ausgebildet, welche
verhindert, daß mit Werkzeugen das Sperrelement
C außer Eingriff vom Diskettenschacht 31 gebracht
werden kann.

Soll die Sperrdiskette aus der in Fig. 9 gezeigten Verriegelungsstellung, in der der Federbügel 33
mit seinem Biegungsabschnitt 34 um die Antriebsspindel 32 eingehängt ist, aus dem Diskettenschacht 31 entfernt werden, wird der Schieber B in
Schieberichtung 9 aus dem Grundkörper A, D gezogen, und dabei zweckmäßigerweise der·Grundkörper anhand seiner Lasche 3a gegen die Zugrichtung gehalten. Mit dem Herausziehen des
Schiebeelements B schiebt sich sein Quersteg 40
unter den Biegungsabschnitt 34 des Federbügels
33 und hebt diesen hoch, so daß die Schenkel 39
durch die Aussparungen 38 im Oberteil D hindurchtreten. Dieser Vorgang wird durch die Abschrägung am Quersteg 40 begünstigt. Dabei entfernt sich der Biegungsabschnitt 34 von der Antriebsspindel 32 und der diese umgebenden Aussparung 41 des Dis kettenschachtes 31. Damit ist
der Biegungsabschnitt des Federbügels 33 nicht
mehr gegen die Wand 42 der Aussparung 41 verstemmt, und die gesamte Sperrdiskette bzw. ihr
Grundkörper A, D kann aus dem Diskettenschacht
zu seiner Entriegelung herausgezogen werden.

Bei dem dritten Ausführungsbeispiel gemäß
Fig. 11 ist der Grundkörper A, D der erfindungsgemäßen Sperrdiskette mit seitlich verstellbaren Greifbacken 43 versehen, die durch gegen den
Grundkörper abgestützte Schraubenfedern 44 in
das Grundkörperinnere gedrückt werden. Zwischen
den beiden Greifbacken 43 ist ein Schieber 45 in
Richtung 9 gleitbar angeordnet. Dessen etwa gabelartige Gestalt läuft in zwei Druckschenkel 46
aus, deren Außenseiten jeweils mit einer Innenseite
der beiden Greifbacken 43 eine gegenüber der
Mittelachse 47 geneigte Anlagefläche 48 bilden.
M.a.W., der Schieber 45 besitzt eine in Schieberichtung 9 zu- bzw. abnehmende Breite b. In der
linken Hälfte der Fig. 11 ist die Sperrdiskette in
Entriegelungsstellung gezeigt, d.h. der Schieber 45
ist um die Strecke bzw. Einschiebtiefe t aus dem
Grundkörper A, D herausgezogen. Soll eine Verriegelung des zu sichernden Diskettenschachtes herbeigeführt werden, müssen die beiden Greifbacken
43 jeweils in Eingriff mit der zugewandten Wand
des (nicht gezeigten) Diskettenschachtes in Eingriff
gebracht werden. Zu diesem Zweck wird der
Schieber 45 um die Tiefe t in Schieberichtung 9 in
den Grundkörper A, D hineingedrückt; die dabei
resultierende Endstellung ist im rechten Teil der
Fig. 11 gezeigt. Im Zuge dieses Verstellvorgangs
werden die Greifbacken 43 durch die anliegenden
Außenseiten des Schiebers 45 um den Verstellbetrag x nach außen gedrückt und können beispielsweise über einen Reibbesatz 49 an der gegenüberliegenden Diskettenschachtwand haften.

**Ansprüche**

1. Vorrichtung zum Sperren eines Diskettenschachtes, in den Speicherdisketten einführbar und
dabei mit dem Diskettenlaufwerk beispielsweise eines Personalcomputers koppelbar sind, gekennzeichnet durch einen in der Außenform der einführbaren Diskette weitgehend entsprechenden Grundkörper (A, D) mit ein oder mehreren daran befestigten Sperrelementen (C), welche gegenüber
dem Diskettenschacht ein- und ausrastbar oder in
Eingriff bringbar durch ein zugehöriges Betätigungsorgan (B) ausgebildet sind.

2. Vorrichtung nach Anspruch 1, dadurch gekennzeichnet, daß das Betätigungsorgan (B) in den
Grundkörper (A, D) baulich integriert und an der
aus dem Schachtausgang herausstehenden Stirnseite (3) des Grundkörpers (A, D) angeordnet ist.

3. Vorrichtung nach Anspruch 2, dadurch gekennzeichnet, daß das Betätigungsorgan (B) im
Grundkörper (A, D) verschiebbar (9) zum Einrasten
bzw. Lösen der Sperrorgane (C) gelagert (13) ist
und einen aus dem Grundkörper (A, D) herausstehenden Bediengriff (3b) aufweist.

4. Vorrichtung nach Anspruch 3, dadurch gekennzeichnet, daß der Bediengriff (3b) an der Stirnseite (3) des Grundkörpers (A, D) als vorstehende Lasche (3b) mit Bohrung (4b) oder als beabstandet verlaufender Steg angeordnet ist, welche sich in Eingriffs- oder Einraststellung der Sperrelemente (C) mit einer entsprechenden Lasche (3a) mit Bohrung (4a) oder einem entsprechenden Steg jeweils an der Ober- oder Unterseite des Grundkörpers (A, D) decken.

5. Vorrichtung nach einem der vorhergehenden Ansprüche, dadurch gekennzeichnet, daß der Grundkörper (A, D) einen Unterteil (A) und einen darauf aufgesetzten Oberteil (D) aufweist, zwischen denen die Sperrelemente (C) gehaltert und deren Betätigungsmechanismus (5, 10) untergebracht sind.

6. Vorrichtung nach einem der vorhergehenden Ansprüche, dadurch gekennzeichnet, daß die Sperrelemente (C) als Blattfedern (11) vorzugsweise aus Kunststoff ausgebildet sind, deren biegbare Zungen (12) relativ zur Ober- und/oder Unterseite des Grundkörpers (A, D) vorgespannt und zum Ein-/Ausrasten (14) verstellbar mittels des Betätigungsorgans (B) ausgebildet sind.

7. Vorrichtung nach Anspruch 6, dadurch gekennzeichnet, daß das Zungenende (26) ein oder mehrmals zur Bildung eines Winkel-, insbesondere V-Profils umgebogen (28) ist.

8. Vorrichtung nach Anspruch 6 oder 7, dadurch gekennzeichnet, daß die Zunge (12) auf deren Ober- bzw. Unterfläche mit einem vorspringenden Zapfen (29) versehen ist.

9. Vorrichtung nach einem der Ansprüche 1 bis 5, dadurch gekennzeichnet, daß das Sperrelement (C) als Federbügel (33) vorzugsweise aus Stahlrundmaterial ausgebildet ist, dessen Biegungsabschnitt (34) in Ruhestellung des Federbügels (33) vom Grundkörper (A,D) wegragt und zum Ein-/Ausrasten (14) verstellbar mittels des Betätigungsorgans (B) ausgebildet ist.

10. Vorrichtung nach Anspruch 9, dadurch gekennzeichnet, daß der Biegungsabschnitt durch einen im Grundkörper ausgebildeten Durchbruch (30) austritt sowie entsprechend dem Querschnittsprofil des Durchbruchs gekrümmt ist bzw. verläuft.

11. Vorrichtung nach Anspruch 3, 5 und einem der vorhergehenden Ansprüche, dadurch gekennzeichnet, daß das Betätigungsorgan (B) als zwischen Unter- und Oberteil (A,D) beweglich geführtes, flächig ausgedehntes Schiebeelement (B) ausgebildet ist, welches zu seiner Verstellung mit dem Bediengriff (3b) gekoppelt ist.

12. Vorrichtung nach Anspruch 11 und einem der Ansprüche 6 bis 10, dadurch gekennzeichnet, daß das Schiebeelement (B) mit seiner Unter- und/oder Oberseite an dem Federbügel (33) und/oder wenigstens einer Blattfeder (11) anliegt und auf diesen zu ihrer Auslenkung (14) mittels des Bediengriffs (3b) verschiebbar (9) angeordnet ist.

13. Vorrichtung nach Anspruch 5 und 6 und einem der Ansprüche 7 und 8, dadurch gekennzeichnet, daß der Ober- und/oder Unterteil (A, D) an seiner Innenseite wenigstens einen sich zur gegenüberliegenden Innenseite erstreckenden Dom (18) aufweist, dem eine Bohrung (20) im nicht zur Zunge (12) gehörigen Teil der Blattfeder (11) entspricht.

14. Vorrichtung nach einem der Ansprüche 1 bis 5, dadurch gekennzeichnet, daß die Sperrelemente (C) als vom Grundkörper (A,D) mittels des Betätigungsorgans (B) seitlich ausrückbare Greifbacken (43) zum Verstemmen gegenüber dem Diskettenschacht (31), insbesondere seiner Wand, ausgebildet sind.

15. Vorrichtung nach Anspruch 14, dadurch gekennzeichnet, daß das Betätigungsorgan (B) als zwischen Unter- und Oberteil (A,D) sowie zwischen den Greifbacken (43) an deren gegenüberliegende Innenseiten seitlich anliegend geführter Schieber (45) mit in Schieberichtung (9) zu- bzw. abnehmender Breite (b) ausgebildet ist, und die Greifbacken (43) mittels quer zur Schieberichtung (9) gerichteter Federelemente (44) in Anlage an den Schieber (45) gedrückt werden.

16. Vorrichtung nach Anspruch 5 und einem der vorhergehenden Ansprüche, gekennzeichnet durch eine zwischen Oberteil (D) und Unterteil (A) einen Grundkörper-Durchbruch abdeckend angeordnete Folie aus elektrisch und/oder magnetisch isolierendem Material.

FIG. 1

FIG. 2

FIG. 3

FIG. 4

FIG. 5

FIG. 6

FIG. 7

FIG. 8

FIG. 9

FIG. 10

FIG. 11